# EUROPÄISCHE PATENTSCHRIFT

(11) **EP 1 832 503 B1**
(45) Veröffentlichungstag und Bekanntmachung des Hinweises auf die Patenterteilung: **28.09.2011**
(21) Anmeldenummer: 07004417.7
(22) Anmeldetag: 03.03.2007
(51) Int. Cl.: B62M 9/10

(54) **Mehrfachkettenradeinheit und Kettenschaltung, insbesondere für Fahrräder**
Multi part chain wheel unit and derailleur gears, especially for bicycles
Unité de roue à plusieurs chaînes et embrayage de chaîne, en particulier pour vélos

(30) Priorität: 07.03.2006 DE 102006010498
(43) Veröffentlichungstag der Anmeldung: 12.09.2007
(73) Patentinhaber: SRAM Deutschland GmbH, 97404 Schweinfurt (DE)
(72) Erfinder: Reiter, Markus, Dipl. Ing., 97424 Schweinfurt (DE); Schmidt, Frank, Dipl. Ing., 97422 Schweinfurt (DE)

(56) Entgegenhaltungen:
- EP-A1- 0 642 972
- DE-A1- 3 936 921

## Beschreibung

Die Erfindung betrifft eine Mehrfachkettenradeinheit sowie eine Kettenschaltung, insbesondere für Fahrräder, mit wenigstens einer derartigen Mehrfachkettenradeinheit.

Kettenschaltungen, insbesondere für Fahrräder, gibt es bereits seit langem. Trotz ihrer offenen und damit ungeschützten Bauweise im Vergleich beispielsweise zu Nabenschaltungen, sind Kettenschaltungen sehr beliebt aufgrund ihres hohen Wirkungsgrades, geringen Gewichtes und kostengünstigen Aufbaus. In jüngerer Zeit ist man bestrebt, die Schaltfunktion zu verbessern, insbesondere die Schaltung unter Last sowie die Schaltstufen zu verkleinern mit entsprechender Erhöhung der Anzahl der Kettenräder. Angestrebt wird beispielsweise eine 10-Gangschaltung mit entsprechend zehn Kettenrädern, wobei sich aufeinanderfolgende Kettenräder jeweils nur um einen Zahn unterscheiden.

Kritisch bei Kettenschaltungen ist vor allem das Hochschalten von einem kleineren Zahnrad auf ein größeres Zahnrad, wenn möglich auch unter Last. Dabei ist es bekannt besondere Hochschalt-Übergangsbereiche vorzusehen, in denen günstige Umschaltbedingungen bestehen. In den Bereichen zwischen den Übergangsbereichen findet kein Umschalten statt, da hier die Kette vom größeren Zahnrad abgewiesen wird und auf dem kleineren Zahnrad verbleibt.

Um in den Übergangsbereichen ein gleichmäßiges und ruckarmes Schalten sicherzustellen, werden die gleichen Kettenräder so gegeneinander im Winkel versetzt, dass unter Berücksichtigung der Kettenteilung die Kette einen gewünschten Verlauf einnimmt. Dabei ist jedoch zu beachten, dass die Kette nicht aus identischen Kettengliedern besteht, sondern alternierend aus Kettengliedern mit inneren Laschenpaaren, den Innengliedern, und Kettengliedern mit äußeren Laschenpaaren, den Außengliedern,. Wenn beim Umlegen der Kette also ein erster Zahn des größeren Kettenrads erstmalig mit einem Kettenglied zusammenwirkt, so ist es häufig so, dass dann, wenn dieses erste Kettenglied von einem Außenglied ist, der erste Zahn zwischen die äußeren Laschen eingreift, jedoch im Falle eines inneren Innenglieds neben dem inneren Laschenpaar steht. Dies muss bei der Konzeption der Kettenschaltung berücksichtigt werden. Dabei kommt es unter anderem darauf an, dass in beiden Schalt-Konstellationen sicherer Eingriff der auf den ersten Zahn entgegen der Laufrichtung folgenden Zähne in die Kette gewährleistet ist. So muss vermieden werden, dass die Kette auf dem größeren Kettenrad "aufreitet", indem eine Kettenlasche auf einen Zahnkopf trifft.

Um eine fehlerfreie Schaltfunktion zu erhalten, muss für die schräg gestellte Kette ausreichend Raum geschaffen werden, was üblicherweise durch Ausbildung entsprechender Vertiefungen auf der dem kleineren Kettenrad zugewandten Seite des größeren Kettenrads erreicht wird. Der Boden der Vertiefung bildet hierbei eine Anlagefläche für eine Kettenlasche oder einen Kettenbolzen der vom kleineren zum größeren Kettenrad querende Kette zur axialen Ausrichtung der Kette (EP 0 313 345 B1).

Eine radiale Führung eines Laschenpaares im Übergangsbereich ist ebenfalls bekannt und zwar mit Hilfe einer Laschenauflagerampe an der dem kleineren Zahnrad zugewandten Seite des größeren Zahnrads in einem Endbereich einer Doppelzahnlücke des größeren Kettenrads (EP 0 642 972). Da auch eine axiale Führung gegeben ist, bestehen an sich gute Voraussetzungen für eine einwandfreie Schaltfunktion. Als nachteilig hat sich jedoch herausgestellt, dass die Kette unter Umständen von der Rampe abgleitet und in Richtung zum kleinen Ritzel verschoben wird. Dies führt zu einer Streckung des aus zwei Kettengliedern bestehenden querenden Kettenabschnitts mit der Folge fehlerhafter Schaltfunktion.

Beide bekannten Lösungen sind schmutzempfindlich, da Schmutz zwischen der radialen bzw. seitlichen Führungsfläche und der Lasche zu einer Fehlfunktion führen kann. Auch kann generell nur ein auf die Mehrfachkettenradeinheit abgestimmter Kettentyp verwendet werden. Die Schaltketten unterschiedlicher Hersteller haben zwar die gleichen Grundmaße (Teilung 12,7 mm, innere Breite 2,38 mm und Rollendurchmesser 7,75 mm gemäß ISO 082 für Kettenschaltungen). Größere Unterschiede gibt es jedoch in der Gestaltung der Außenlaschen, z.B. durch Wölbung der Außenlaschen, sowie in der Länge der Kettenbolzen mit dementsprechend mehr oder weniger großen Überstand über die jeweilige Außenlasche.

Eine Kettenschaltung mit Zähnezahldifferenz 1 zwischen aufeinanderfolgenden Kettenrädern ist an sich bekannt (DE 39 36 921 A1). Um das Queren der Kette zu erleichtern und dabei eine radiale Führung zu erhalten, ist im Übergangsbereich ein Zahn des kleineres Zahnrads entsprechend der Kontur der querenden Lasche geformt, um die vom größeren Zahnrad weiter entfernte querende Lasche stellenweise radial abstützen zu können.

Der Erfindung liegt die Aufgabe zugrunde, eine Mehrfachkettenradanordnung bereitzustellen, die auch bei kleiner Gangabstufung zuverlässiges Schalten gewährleistet, dabei auch für unterschiedlich ausgebildete Schaltketten geeignet ist und darüber hinaus für Schmutz unempfindlich ist.

Diese Aufgabe wird durch die Merkmale des Anspruchs 1 gelöst.

Die für die zuverlässige Schaltfunktion wichtige radiale Führung erhält man durch das Einpassen des einen querenden Kettengelenks zwischen die hintere Zahnflanke des letzten Zahns des kleineren Kettenrads und die vordere Zahnflanke des ersten Zahns des größeren Kettenrads. Die axiale Führung ergibt sich durch den Eingriff des letzten Zahns zwischen die Laschen des dem querenden Kettenglieds in Kettenlaufrichtung vorangehenden letzten Kettenglieds. Dabei wird in überraschend einfacher Weise auch dem Umstand Rechnung getragen, dass ausgehend von der Schalt-Konstellation mit erstem Zahn an der Innenseite einer Außenlasche des ersten Kettengelenks (nachfolgend Außenlaschen-Konstellation) die querende Kette um die Dicke des ersten Zahns zum kleineren Zahnrad hin zu verlagern ist, um in die alternative Konstellation (nachfolgend Innenlaschen-Konstellation) zu gelangen mit an der Außenseite einer Innenlasche des ersten Kettenglieds anzuliegendem ersten Zahn. Da erfindungsgemäß lediglich ein Kettenglied zwischen dem ersten Zahn des größeren Kettenrads und dem letzten Zahn des kleineren Kettenrads angeordnet ist, befindet sich der letzte Zahn in der Außenlaschen-Konstellation ebenfalls zwischen zwei Außenlaschen des letzten Kettenglieds, so dass hier die Kette axial relativ weit zum großen Kettenrad hin verlagert werden kann (maximal bis zum Anschlag an die Innenseite der entsprechenden Außenlasche). In der Innenlaschen-Konstellation dagegen befindet sich der letzte Zahn zwischen zwei Innenlaschen mit dementsprechend um eine Innenlaschendicke reduziertem axialen Bewegungsspiel der Kette am letzten Zahn. Die Schaltkette kann daher beim Schaltvorgang von der Umlegeeinrichtung (z.B. Umwerfer) in der Außenlaschen-Konstellation mit Eingriff lediglich am letzten Zahn weiter zum größeren Kettenrad hin abgelenkt werden als in der Innenlaschen-Konstellation, so dass bei der weiteren Drehung der Kettenräder das erste Kettenglied auf die jeweils richtige Seite des ersten Zahns gelangt. Somit ergibt sich für die beiden Konstellationen eine optimale Kettenführung und damit eine optimale Schaltfunktion.

Sowohl die Radialführung als auch die axiale Führung am kleineren Kettenrad sind unabhängig von der speziellen Herstellungsform der Schaltkette, insbesondere der Form und Dicke der Außenlasche sowie der Länge des Kettenbolzens. Dies bietet daher eine gute Kompatibilität mit Ketten unterschiedlichster Hersteller. Auch ist die Führungsfunktion weitgehend unabhängig von Verschmutzungen, die sich in erster Linie zwischen den Kettenrädern ansammeln, da die Doppelzahnlücke erfindungsgemäß so groß ist, dass es überhaupt nicht zur Berührung zwischen größerem Kettenrad und querenderm Kettenglied kommt abgesehen vom Zusammenwirken mit dem ersten Zahn.

Besonders bevorzugt ist vorgesehen, dass das größere Kettenrad einen die Doppelzahnlücke bildenden herausgenommen Bereich aufweist mit einer derartigen Form, dass das größere Kettenrad in axialer Richtung betrachtet im Wesentlichen keine Überlappung mit dem querenden Kettenglied aufweist. Dies ergibt zum einen besonders kostengünstige Herstellbarkeit, da ein Herausschneiden oder -stanzen wesentlich kostengünstiger ist, als beispielsweise ein Prägevorgänge. Auch ergibt sich vorteilhaft geringes Gewicht.

Vor allem bei kleinen Kettenrädern, führt ein derart großer herausgenommener Bereich unter Umständen zu einer zu starken mechanischen Schwächung des Kettenrad. Im Rahmen der Erfindung ist es daher, wenn das größere Kettenrad einen die Doppelzahnlücke bildenden herausgenommenen Bereich aufweist mit einer derartigen Form, dass das größere Kettenrad, in axialer Richtung betrachtet, eine Überlappung mit dem querenden Kettenglied aufweist, jedoch mit lichtem Abstand zwischen dem querenden Kettenglied und dem größeren Kettenrad im Bereich der Überlappung.

Besonders bevorzugt ist jedoch die Lösung ohne Überlappung mit dem querenden Kettenglied, da dann prinzipiell auch bei starken Verschmutzungen keine Gefahr einer Schalt-Fehlfunktion besteht.

In Weiterbildung der Erfindung wird vorgeschlagen, dass das größere Kettenrad in einem Überlappungsbereich mit den Laschen des letzten Laschenpaars eine vorzugsweise geprägte Vertiefung aufweist, jedoch mit lichtem Abstand zwischen der Vertiefung und dem letzten Laschenpaar.

Insbesondere bei kleinen Kettenrädern gibt es unter Umständen Platzprobleme für die Laschen des letzten Ketttenglieds, die durch die Vertiefung beseitigt werden. Auch hier ist ein lichter Abstand zwischen der Vertiefung und dem letzten Laschenpaar vorgesehen, um die Vorteile der Erfindung nämlich größtmögliche Kompatibilität mit unterschiedlichen Schaltungskettenmodellen und Schmutzunempfindlichkeit zu erhalten. Erfindungsgemäß ist eine axiale Führung durch den Boden in der Vertiefung nicht erforderlich, da diese durch den in das letzte Laschenpaar eingreifenden letzten Zahns des kleineren Kettenrads sichergestellt wird.

Vor allem bei Kettenradkombinationen mit einem Unterschied der nominellen Zähnezahl von 1 hat es sich als vorteilhaft herausgestellt, wenn der erste Zahn im Bereich eines am radial äußeren Ende der vorderen Zahnflanke gebildeten Zahnkopfecks mit der Lasche des querenden Kettenglieds zusammenwirkt. Das vordere Gelenk des querenden Kettengliedes, d.h. dessen Kettenrolle liegt jedoch der hinteren Zahnflanke des letzten Zahns unmittelbar gegenüber, so dass es je nach konkreter Schaltsituation und Zugbelastung sowie Längungszustand der Schaltkette zu einer mehr oder weniger ausgeprägten Anlage der Kettenrolle an der hinteren Zahnflanke kommt. Zur Anlage kann es auch dann kommen, wenn am Ende des Umschaltvorgangs die dem ersten Zahn folgenden Zähne des größeren Kettenrads in die Kette eingreifen. Nach längerem Gebrauch mit entsprechender Kettenlänge kann es jedoch auch vorkommen, dass kein unmittelbarer Kontakt zwischen Kettenrolle und hintere Zahnflanke zustande kommt. Dies ist jedoch für die Funktion nicht weiter hinderlich, da dann die jeweilige Lasche (Außenlasche oder Innenlasche) des querenden Kettenglieds in einer geringfügig höheren Position am Zahnkopfeck des ersten Zahns zur Anlage gelangt.

Zur Verbesserung der Schaltfunktion wird ferner vorgeschlagen, dass der erste Zahn dem Verlauf des querenden Kettenglieds im Wesentlichen entsprechend schräg gestellt ist, wobei diese Maßnahme an sich bekannt ist. Ferner ist auch vorteilhaft, die Dicke des ersten Zahns im Wesentlichen entsprechend der Dicke einer inneren Lasche der Schaltkette festzulegen. Die Dicke des Zahns entspricht nämlich, wie bereits erläutert, dem seitlichen Verlagerungsweg der Schaltkette am ersten Zahn, wenn man beide Schalt-Konstellation miteinander vergleicht. Der seitliche Verlagerungsweg der von der Umlegeeinrichtung abgebogenen Schaltkette gegenüber dem letzten Zahn beim Wechsel von einer Konstellation zur anderen Konstellation entspricht ebenfalls im Wesentlichen der Dicke der inneren Lasche, so dass beide Verlagerungswege im Wesentlichen gleich groß sind.

Um die Sicherheit noch weiter zu erhöhen, dass beim Umschalten das erste Kettenglied auf die der jeweiligen Schalt-Konstellation entsprechende Seite des ersten Zahns gelangt, ohne auf diesen "aufzureiten", kann der erste Zahn im Bereich eines am radial äußeren Ende der vorderen Zahnflanke des ersten Zahns ausgebildeten Zahnkopfecks mit einer Einweisschräge für eine äußere Lasche des ersten Kettenglieds versehen sein.

Besonders bevorzugt ist der Einsatz der Erfindung bei einer Mehrfachkettenradeinheit, bei der sich die nominellen Zähnezahlen des größeren und des kleineren Kettenrads um 1 unterscheiden. Unter nomineller Zähnezahl wird in diesem Zusammenhang die Zähnezahl verstanden, die das Kettenrad hätte, wenn keiner der Zähne zur Bildung einer jeweiligen Doppelzahnlücke weggenommen worden wäre.

Die Erfindung betrifft auch eine Kettenschaltung, insbesondere für Fahrräder, umfassend eine antreibbare Kettenradeinheit und eine angetriebene Kettenradeinheit sowie eine diese beiden Kettenradeinheiten verbindende Schaltkette, wobei mindestens eine der Kettenradeinheiten als Mehrfachkettenradeinheit, wie vorstehend erläutert, ausgebildet ist, und wobei zum Umlegen der Ketten zwischen den beiden Kettenrädern der Mehrfachkettenradeinheit eine Umlegeeinrichtung in einem Einlaufbereich vorgesehen ist, welche die Kette zum Gangwechsel vom einen der beiden Kettenräder auf das andere Kettenrad überführt.

Es zeigt:
- Figur 1: eine Seitenansicht zweier Kettenräder einer ansonsten nicht weiter dargestellten Mehrfachkettenradeinheit im einem Bereich der Kettenrollen geschnittenen dargestellten Kettenabschnitt im Bereich eines Hochschalt-Übergangsbereichs in einer Innenlaschen-Konstellation;
- Figur 2: die Anordnung in Figur 1, jedoch in einer Außenlaschen-Konstellation;
- Figur 3: eine Ansicht in radialer Richtung (Pfeil III) der Anordnung in Figur 1, jedoch mit gekürztem Kettenabschnitt;
- Figur 4: eine Ansicht entsprechend Figur 3, jedoch mit der Konstellation gemäß Figur 2 (Pfeil IV);
- Figur 5: eine Perspektiv-Ansicht auf eine Anordnung aus vier vergleichsweise kleinen Kettenrädern wiederum als Teil einer ansonsten weggelassenen Mehrfachkettenradeinheit;
- Figur 6: eine teilweise abgebrochene Perspektiv-Ansicht von schräg oben auf ein Kettenrad der Anordnung gemäß Figur 5 mit nomineller Zähnezahl 13;
- Figur 7: eine Seitenansicht mit leichter Neigung des Kettenrads gemäß Figur 6, wiederum teilweise abgebrochen;
- Figur 8: eine Seitenansicht der Kettenräder mit nomineller Zähnezahl 12 und nomineller Zähnezahl 13 gemäß Figuren 5 bis 7 mit einem Kettenabschnitt im Hochschalt-Übergangsbereich in einer Innenlaschen-Konstellation ähnlich Figur 1;
- Figur 9: eine Ansicht entsprechend Figur 8, jedoch in einer Außenlaschen-Konstellation ähnlich Figur 2; und
- Figur 10: eine stark vereinfachte Seitenansicht einer Fahrradkettenschaltung.

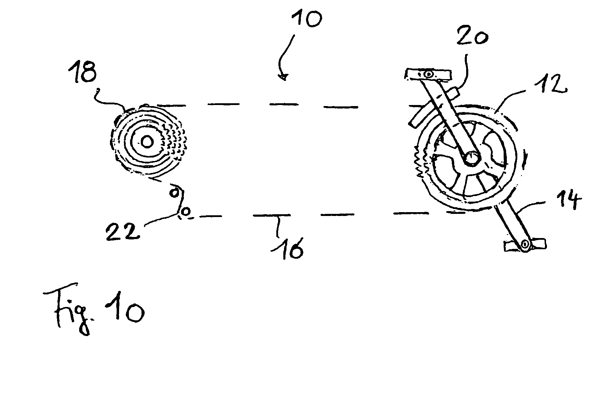

Die Figur 10 zeigt als Prinzip-Skizze eine Gangschaltung 10 eines Fahrrads mit einer vorderen Kettenradeinheit 12, die über ein Tretkurbelpaar 14 antreibbar ist. Eine Schaltkette 16 verbindet die Kettenradeinheit 12 mit einer hinteren Kettenradeinheit 18.

Die vordere Kettenradeinheit 12 besteht im dargestellten Beispiel aus zwei Kettenrädern, wobei üblicherweise auch drei Kettenräder vorgesehen sein können. Zum Umlegen der Ketten vom einen Kettenrad auf das andere dient eine vordere Umlegeeinrichtung 20, die auch Kettenwerfer genannt wird.

Dementsprechend ist auch der hinteren Kettenradeinheit 18 eine Umlegeeinrichtung 22 zugeordnet (Umwerfer oder Schaltwerk genannt). Beide Umlegeeinrichtungen 20 und 22 sind jeweils im Einlaufbereich der Kette 16 vorgesehen, damit in gewünschter Weise zwischen den Kettenrädern umgeschaltet werden kann.

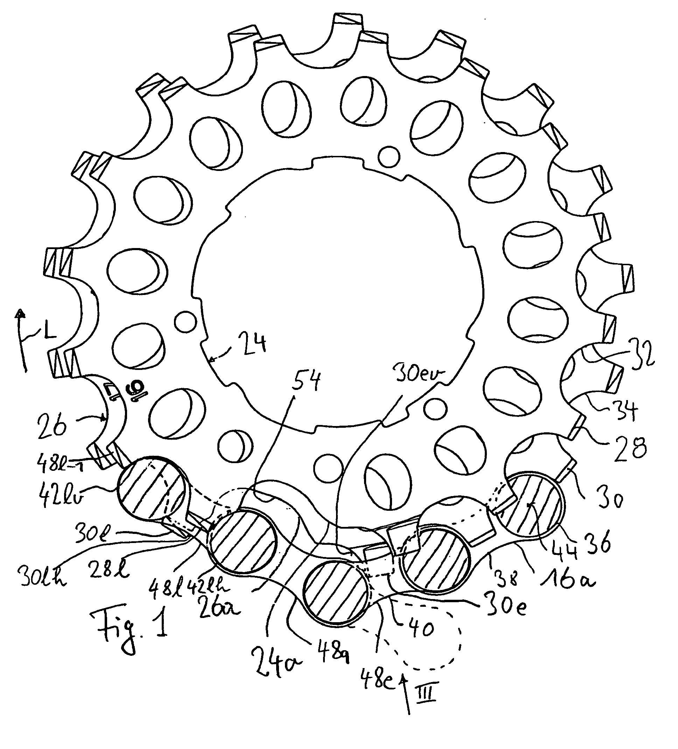

Die Erfindung, wie nachfolgend anhand der Figuren 1 bis 9 beschrieben, befasst sich einer verbesserten Ausbildungen von Mehrfahrkettenradeinheiten und ist somit prinzipiell sowohl auf die antreibbare Kettenradeinheit 12 wie auf die angetriebene Kettenradeinheit 18 anwendbar, wenn auch bevorzugt für letztere.

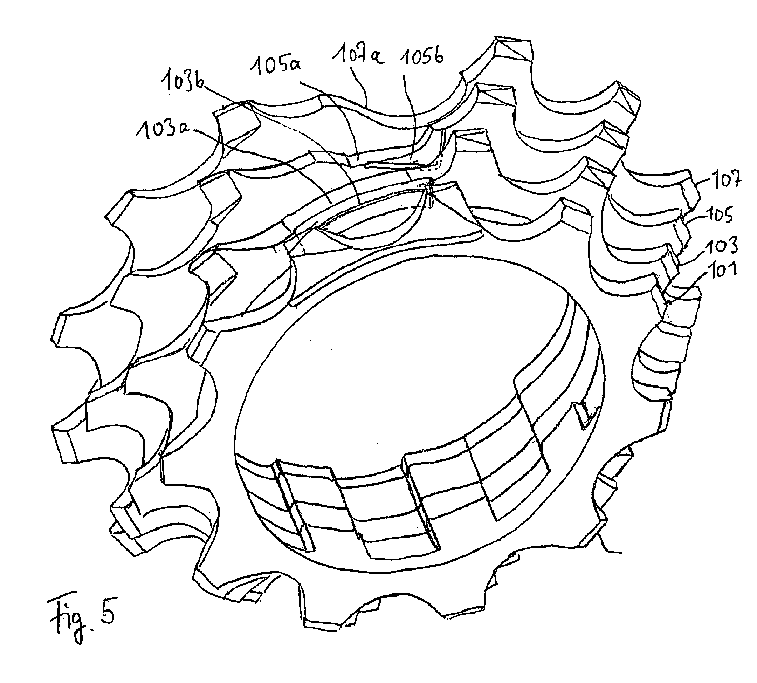

Der prinzipielle Aufbau von Mehrfahrkettenradeinheiten (auch Kassette genannt) und deren Montage auf entsprechenden Achsen ist bekannt. Die Zeichnungen beschränken sich daher auf die Darstellung der Kettenräder (Zahnkränze) und deren Zusammenwirken mit der Schaltkette. Auch beschränken sich die Zeichnungen zur Erläuterung des Schaltprinzips auf die Darstellung jeweils zweier Kettenräder, abgesehen von Figur 5 mit vier Kettenrädern wiederum nur als Teil einer z.B. zehn Kettenräder umfassenden Kassette.

In den Figuren 1 bis 4 sind zwei relativ große Kettenräder dargestellt, ein Kettenrad 24 mit nomineller Zähnezahl 16 sowie ein Kettenrad 26 mit nomineller Zähnezahl 17. Da beide Kettenräder jeweils einen Hochschalt-Übergangsbereich 24a bzw. 26a aufweisen, in dem ein Zahn weggelassen ist, so dass sich eine Doppelzahnlücke ergibt, weist das Kettenrad 24 tatsächlich nur 15 Zähne 28 auf und das Zahnrad 26 nur 16 Zähne 30. Zwischen aufeinanderfolgenden Zähnen 28 werden Einfach-Zahnlücken 32 gebildet und zwischen aufeinanderfolgenden Zähne 30 Einfach-Zahnlücken 34.

Für den Umschaltvorgang vom kleineren Kettenrad 24 auf das größere Kettenrad 26 von besonderer Bedeutung ist zum einen ein letzter Schaltzahn 28I des kleineren Kettenrads 24, auf den in zur Kettenlaufrichtung L entgegengesetzter Richtung unmittelbar der Bereich 24a mit der Doppelzahnlücke folgt. Ferner von Bedeutung ist ein erster Schaltzahn 30e des größeren Kettenrads 26, der entgegen der Kettenlaufrichtung L unmittelbar dem Bereich 26a mit Doppelzahnlücke des größeren Kettenrads 26 folgt.

Auf die beiden Kettenräder 24 und 26 ist ein Abschnitt 26a einer Schaltkette gelegt, wobei zur Vereinfachung der Darstellung die Kettengelenke 36 nur als Kreise angedeutet sind zudem geschnitten. Die Kettengelenke 36 haben aber üblichen Aufbau aus Kettenrolle und Kettenbolzen, ggf. Kettenhülse zwischen Kettenrolle und Kettenbolzen. Die Kettengelenke 36 werden alternierend von Außenlaschen 38 und Innenlaschen 40 miteinander verbunden.

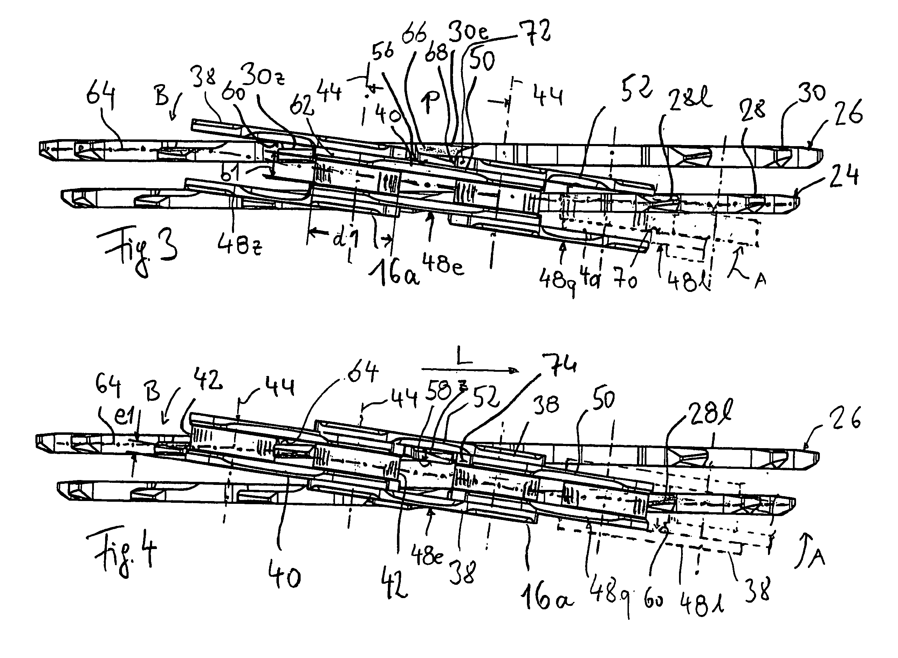

In den Figuren 3 und 4 erkennt man die Kettenrollen 42, sowie Gelenkachsen 44.

Bei der Schaltkette 16 handelt es sich um eine übliche Schaltungskette für Kettenschaltungen, deren Grundabmessungen genormt sind (ISO Nr. 082). Vorgegeben ist Kettenteilung p, d.h. der Abstand von 12,7 mm zwischen aufeinanderfolgenden Gelenkachsen 44, der Rollendurchmesser d1 von 7,55 mm max. sowie die innere Breite b1 (lichter Abstand zwischen den Innenlaschen 40) von 2,38 mm min..

Im Übrigen sind die Kettenhersteller im Wesentlichen frei in der Gestaltung ihrer Schaltketten. So gibt es Schaltketten, bei denen die Außenlaschen in einem Mittelbereich deutlich nach Außen gewölbt sind. Auch gibt es Kettenschaltungen, bei denen die Kettenbolzen deutlich vorstehen, im Gegensatz zu anderen, bei denen die Kettenbolzen im Wesentlichen mit der Außenlaschen-Außenseite bündig abschließen. Wie im nachfolgenden noch im Einzelnen erläutert werden wird, ist für die ordnungsgemäße Schaltfunktion gemäß der Erfindung die spezielle Kettenform unerheblich, so lange es sich um eine normgerechte Schaltkette handelt.

Diese Ketten lassen sich generell in Kettenglieder 48 unterteilen, genauer in Innenglieder 50 aus einem Paar innerer Laschen 40 und Hülsen als Teil des jeweiligen Kettengelenks sowie ferner in Außenglieder 52 aus einem Paar von Außenlaschen 38 und diese verbindenden die Hülsen der Innenlaschen 50 durchsetzenden Kettenbolzen. Diese Kettenbolzen durchsetzen die Hülsen der Innenlaschen und bilden mit den Kettenrollen 42 die Kettengelenke 36.

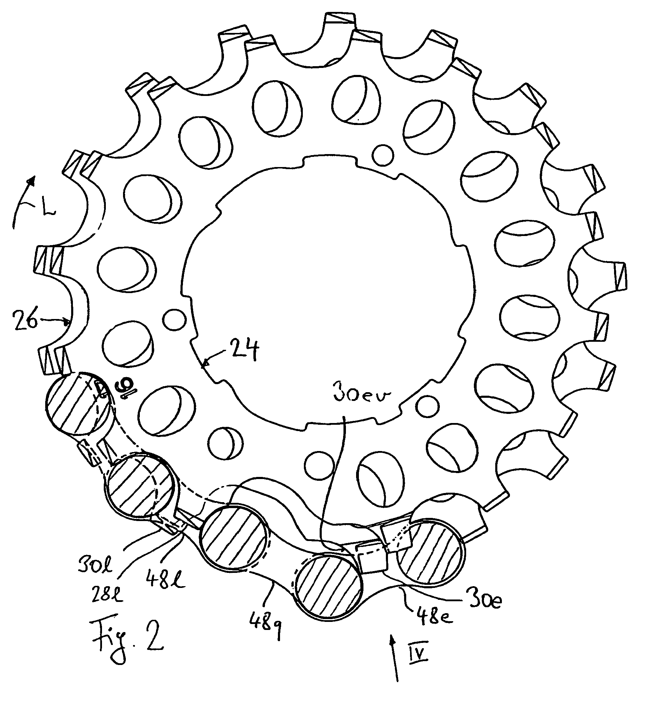

Beim Übergang vom Kettenrad 24 zum Kettenrad 26 gibt es spezielle Kettenglieder 48, die im Folgenden eine Rolle spielen werden, nämlich ein letztes Kettenglied 481, welches als letztes Kettenglied noch mit einem Zahn, nämlich dem letzten Zahn 28I des Kettenrads 24 zusammenwirkt, auf welches in zur Kettenlaufrichtung L entgegengesetzter Richtung ein zum größeren Kettenrad 26 querendes Kettenglied 48q folgt. Das nächstfolgende Kettenglied ist das erstmals mit einem Zahn, dem ersten Zahn 30e des größeren Kettenrads 26 zusammenwirkende erste Kettenglied 48e. Da die Kettenglieder 48 nicht gleich sind, sondern sich Innenglieder 50 und Außenglieder 52 abwechseln, gibt es auch beim Gangwechsel zwei mögliche Konstellationen. In der in Figur 1 und Figur 3 dargestellten Innenlaschen-Konstellation wirkt mit dem ersten Zahn 30e des größeren Zahnrads 26 ein Innenglied 50 zusammen und mit dem letzten Zahn 28I des kleineren Kettenrads 24 ebenfalls ein Innenglied 50. Umgekehrt wirkt in der Außenlaschen-Konstellation gemäß Figuren 2 und 4 eine Außenglied 52 mit dem ersten Zahn 30e zusammen ebenso wie ein Außenglied 52 mit dem letzten Zahn 28I.

Für den Umschaltvorgang wesentlich ist die Form des Übergangsbereichs 26a. Man erkennt ihn in Figuren 1 und 2, dass dieser eine Doppelzahnlücke bildet, da der dem ersten Zahn 30e in Umlaufrichtung L normalerweise im Abstand p entsprechend der Kettenteilung nachfolgende Zahn des größeren Zahnrads 26 fehlt.

Der Übergangsbereich 26a ist in Richtung radial nach innen so stark ausgeschnitten, dass es nicht nur keine Überlappung zwischen der Außenkontur des querenden Kettenglieds 48q mit dem größeren Kettenrad 26 gibt. Wie die Figuren 1 und 2 deutlich zeigen, haben die Außenkonturen von querendem Kettenglied 48q und Kettenrad 26 bei axialer Betrachtung darüber hinaus deutlichen Abstand zu einander abgesehen vom Bereich des Kontakts mit dem ersten Zahn 30e.

Im Einzelnen wird der Übergangsbereich 26a mit einer Konturlinie 54 des Kettenrads 26 gebildet, die von einer im Bezug auf die Kettenlaufrichtung L hinteren Zahnflanke 30Ih des Zahns 301 ausgeht und in eine vordere Zahnflanke 30ev des ersten Zahns 30e übergeht.

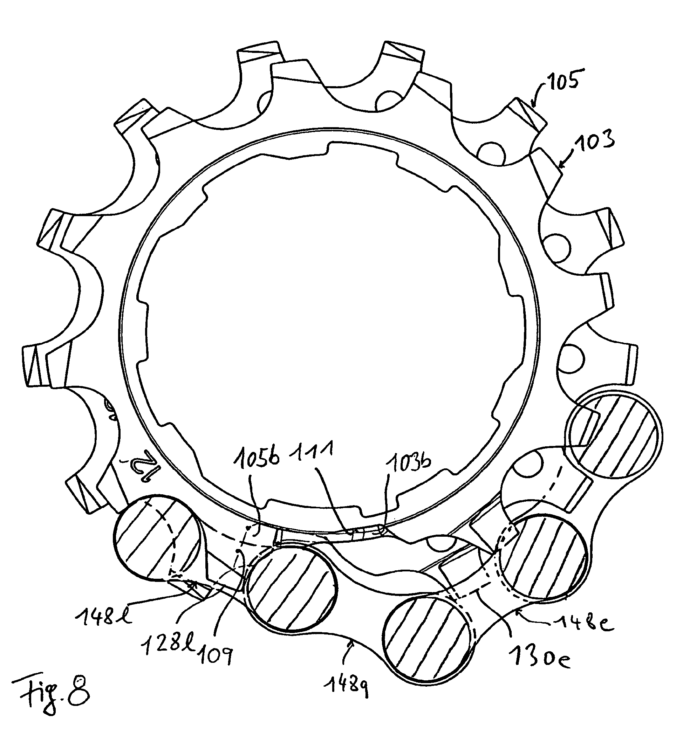

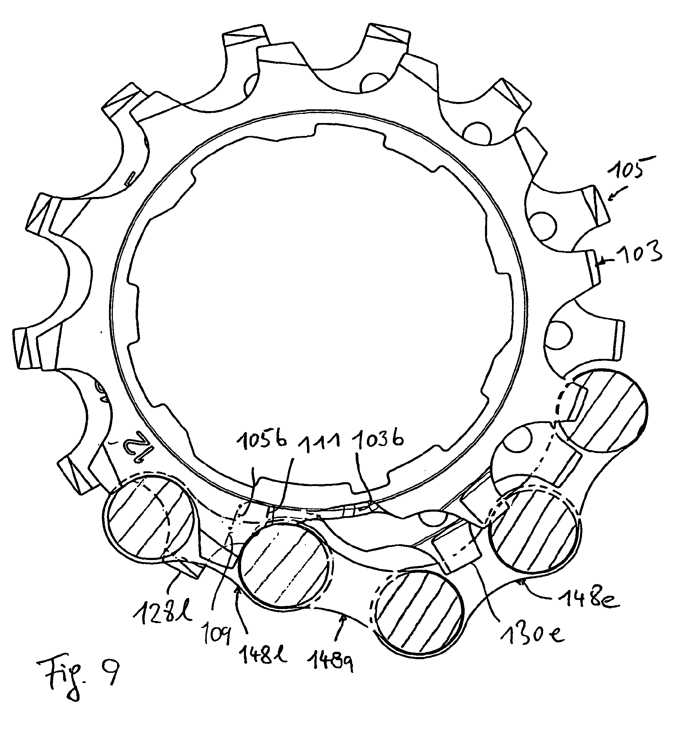

Anzumerken ist noch, dass der besagte Übergangsbereich 26 in kostengünstiger Weise herausgeschnitten oder heraus gestanzt ist. Eine Strukturierung der dem kleineren Kettenrad 24 zugewandten Seitenfläche des größeren Kettenrads 26, beispielsweise durch Einprägen oder Herausarbeiten einer Vertiefung zur Aufnahme und Teilen der Schaltkette, ist bei diesem Ausführungsbeispiel (im Gegensatz zu dem gemäß Figuren 8 und 9) nicht vorgesehen. Besonders kostengünstige Herstellbarkeit ist die Folge. Vorteilhaft ist auch das deutlich reduzierten Kettenradgewicht. Der normale Kettenlauf auf dem größeren Zahnrad 26 (z.B. nach Abschluss des dargestellten Hochschalt-Vorgangs) ist auch im Übergangsbereich 24a sichergestellt, dass sich hier das jeweilige Kettenglied mit seiner vorderen und hinteren Kettenrolle an der hinteren Zahnflanke 30Ih des letzten Zahns 30I bzw. der vorderen Zahnflanke 30ev des ersten Zahns 30e zuverlässig abstützen kann. Der Winkelabstand zwischen den beiden Zähne 301 und 30e ist entsprechend zu reduzieren im Vergleich zum Winkelabstand zwischen den übrigen Zähnen in der Teilung p.

Wie insbesondere die Figuren 3 und 4 zeigen, ergibt sich aus dem Aufbau der Schaltkette aus alternierenden Innengliedern 50 und Außengliedern 52 eine unterschiedliche räumliche Schalt-Konstellation.

In der Innenlaschen-Konstellation gemäß Figur 3 (und Figur 1) ist das auf das querende Kettenglied 48q entgegen der Kettenlaufrichtung L folgende erste Kettenglied 48e ein Innenglied. Die dem Kettenrad 26 näher gelegene Innenlasche 40 liegt mit ihrer Außenfläche 56 an einer dem kleineren Kettenrad 24 zugewandten Seitenfläche 58 des ersten Zahns 30e an. Der erste Zahn 30e ist dem Verlauf der Schaltkette 16 entsprechend schräg gestellt, so dass sich eine angenähert flächige gegenseitige Anlage ergibt.

Ein auf den ersten Zahn 30e entgegen der Laufrichtung L folgender zweiter Zahn 30z dagegen greift zwischen die Außenlaschen 38 des zweiten Kettenglieds 48z ein, wobei er bis an die Innenfläche 60 der Außenlasche 38 herangerückt ist und mit seiner in Bezug auf die Laufrichtung L vorderen Zahnflanke am Außenumfang der in Figur 3 oberen dem Kettenrad 26 näheren Innenlasche 40 des ersten Kettenglied 48 anliegt.

Den Kettenverlauf geben die Figuren 3 und 4 nur ungenau wieder, da der Kettenabschnitt 16a gestreckt gezeichnet ist. Tatsächlich erhält die Kette einen gebogenen Verlauf.

Zu Beginn des Schaltvorgangs wird die Kette von der Umlegeeinrichtung 22 (Figur 10) in Richtung zum größeren Kettenrad 26 hin axial ausgelenkt, so dass sich eine einfach gewölbte Kettenlinie ergibt. Hierbei versucht das letzte Kettenglied 48I gegenüber dem letzten Zahn 281 soweit wie möglich zum äußeren Kettenrad 26 hin zu rücken, ggf. bis zur Anlage an der Innenfläche 60 bzw. 64 der jeweiligen in den Figuren 3 und 4 unteren Außenlaschen 38 bzw. Innenlasche 40 des letzten Kettenglieds 48I (in den Figuren 3 und 4 mit unterbrochener Umrisslinie angedeutet). Gegenüber der zeichnerischen Darstellung in den Figuren 3 und 4 wäre der Kettenverlauf dementsprechend zu korrigieren (Abbiegung in Richtung des Pfeils A).

Dementsprechend ergibt sich nach dem Auflegen der Kette 16 auf das größere Kettenrad 26 eine Abbiegung in entgegengesetzter Richtung (Pfeil B) um den ersten und zweiten Zahn 30e und 30z. Dann ergibt sich eine gestreckt-S-förmige Abbiegung der Kette, angenäht entsprechend einer in den Figuren mit einer Strich-Punkt-Linie angedeuteten Kettenbiegelinie 64.

In der Außenlaschen-Konstellation gemäß Figur 4 (und Figur 2) liegt eine Außenlasche 38 des ersten Kettenglieds 48e mit ihrer Innenfläche 60 an einer vom kleineren Kettenrad 24 abgewandten Seitenfläche 66 des ersten Zahns 30e. Diese Außenlasche ist wiederum entsprechend dem Kettenverlauf schräg gestellt und zusätzlich radial nach Außen im Richtung zum kleineren Kettenrad 24 geneigt. Um ein "Aufreiten" der entsprechenden Außenlaschen 38 beim Umschalten zu verhindern, ist die vom kleineren Zahnrad 24 abgewandte vordere Ecke des Kopfes des ersten Zahns 30e mit einer Abschrägung 68 versehen.

Da die Außenfläche 56 der Innenlaschen 40 generell mit den Innenfläche 60 der Außenlaschen 38 bei gestrecktem Verlauf miteinander fluchten, ist der Kettenabschnitt 16a in der Außenlaschen-Konstellation gemäß Figur 4 um die Zahndicke z des Zahns 30e gegenüber der Innenlaschen-Konstellation gemäß Figur 3 in Richtung der Achsen 44 zum größeren Kettenrad 26 hin verlagert.

Eine ähnliche Situation ergibt sich im Bereich des letzten Zahns 28I. Geht man hier davon aus, dass der letzte Zahn 28I in der Innenlaschen-Konstellation gemäß Figur 3 an der Innenfläche 64 der vom größeren Kettenrad 26 entfernteren Innenlasche 40 anliegt oder geringfügig hiervon beanstandet ist, so kann in der Außenlaschen-Konstellation gemäß Figur 4 die vom Kettenrad 26 entferntere Außenlasche 38 mit ihrer Innenfläche 60 bis an den letzten Zahn 281 heran rücken. Eine Querverschiebung um die Innenlaschendicke e1 ist die Folge.

Beim Umschalten der Kette 16 auf das größere Kettenrad 26 kann daher die Kette 16 gegenüber dem letzten Zahn 281 um die Laschendicke e1 weiter zum größeren Kettenrad 26 hin, verlagert werden, wenn eine Außenlaschen-Konstellation an Stelle einer Innenlaschen-Konstellation auftritt. Damit gelangt das erste Kettenglied 48e bei weiterer Kettenraddrehung in die gewünschte, um die Dicke z des Zahns 30e in den Figuren 3 und 4 nach oben verschobene Lage gegenüber dem Zahn 30e. Zuverlässiges Umschalten ist daher gewährleistet.

Diese axiale, d.h. seitliche Führung der Schaltkette 16 beim Umschalten durch den letzten Zahn 28I ist unabhängig von der Gestaltung der Schaltungskette 16, solange nur die ISO-Maße wie eingangs angesprochen beibehalten werden. Kompatibilität mit Schaltungsketten unterschiedlicher Hersteller ist somit sichergestellt. Der Eingriff des letzten Zahns 28 in die letzten Kettenlasche ist von Verschmutzungen der Kassette weitgehend unabhängig zumal sich derartige Verschmutzungen in erster Linie zwischen den Kettenrädern absetzten.

Die radiale Abstützung des Kettenabschnitts 16a beim Umschalten erfolgt auf Seiten des kleineren Kettenrads 24 zumindest zu Beginn der Umschaltbewegung über Kettenrolle 42Iv am vorderen Kettengelenk des letzten Kettenglieds 48I mit Anlage an der hinteren Zahnflanke des dem letzten Zahn 48I vorangehenden Zahns 48I-1. Am Ende der Umschaltbewegung kommt es je nach Zugbelastung der Kette und Kettenlängung zu einem mehr oder minder ausgeprägtem Kontakt der hinteren Kettenrolle 42lh des letzten Kettenglieds (= vordere Kettenrolle des querenden Ketteglieds 48q) mit der hinteren Zahnflanke 28lh des letzten Zahns 28I.

Am größeren Kettenrad 26 ergibt sich die axiale Führung durch Anlage der jeweiligen Lasche 38 bzw. 40 des querenden Kettenglieds 48q an einer Vorderflanke 30ev des ersten Zahns 30e im Bereich des Zahnkopfes. Bei der Innenlaschen-Konstellation gemäß Figur 3 betrifft es dies Außenumfangsfläche 72 einer Außenlasche 28 und bei der Außenlaschen-Konstellation gemäß Figur 4 eine Außenumfangsfläche 74 einer Innenlasche 40.

Das querende Kettenglied 48q ist auf diese Weise zwischen dem letzten Zahn 28l des kleineren Kettenrads 24 und den ersten Zahn 30e des größeren Kettenrads 26 eingefangen. Am ersten Zahn 30e ist das Kettenglied 48q also sowohl axial als auch radial abgestützt und zwar in einer der jeweiligen Schalt-Konstellationen zugeordneten, definierten Raumposition. Die Schaltkette 16 wird daher im Verlauf der weiteren Kettendrehung in vorgegebener Weise auf das größere Kettenrad 26 gelegt. Die Kettenglieder kommen zuverlässig in Eingriff mit den weiteren Zähnen 30 des Kettenrads 26; ein "Aufreiten" wird verhindert. Dies gilt für beide Schalt-Konstellationen.

In den Figuren 5 bis 9 wird eine weitere Ausführungsform der Erfindung erläutert, wobei Bauelemente, die ihre Entsprechung in der ersten Ausführungsform gemäß 1 bis 4 haben, mit den selben Bezugsziffern, jedoch jeweils vermehrt um die Zahl 100, versehen sind.

In Figur 5 sind die vier kleinsten Kettenräder einer 10-Gang-Einfach-Kettenradeinheit perspektivisch dargestellt, und zwar der Reihe nach ein Kettenrad 101 mit nomineller und realer Zähnezahl 11, ein Kettenrad 103 mit nomineller Zähnezahl 12, ein Kettenrad 105 mit nomineller Zähnezahl 13 sowie ein Kettenrad 107 mit nomineller Zähnezahl 14. Bei den Kettenrädern 103, 105, 107 ist jeweils ein Übergangsbereich 103a, 105a, 107a durch Weglassen eines Zahns ausgeformt.

Der Übergangsbereich 107a des Kettenrads 107 ist lediglich durch Herausschneiden oder Herausstanzen eines entsprechenden Bereichs des Kettenrads 107 gebildet und entspricht somit den Übergangsbereichen 24a und 26a der Kettenräder 24 und 26 der Ausführungsform gemäß Figuren 1 bis 4.

Auch bei den Übergangsbereichen 105a und 103a ist ein Kettenradbereich heraus gestanzt oder heraus geschnitten und zwar soweitgehend, dass es allenfalls eine geringfügige Überlappung mit dem querenden Kettenglied 148q mit dem jeweils größeren Kettenrad beim Gangswechsel zum größeren Kettenrad gibt. Sofern es zur Überlappung kommt, nämlich beim Übergang vom Kettenrad 101 auf das Kettenrad 103, ist an der dem kleineren Kettenrad 101 zugewandten Seite des größeren Kettenrads 103 eine derart dimensionierte Vertiefung 103b ausgeprägt oder durch Materialabtragung hergestellt, dass in allen Schaltsituationen ein lichter Abstand zwischen Kettenrad 103 und querendem Kettenglied 148q besteht.

Auch das Kettenrad 105 ist mit einer Vertiefung 105b versehen, die jedoch nicht dem querenden Kettenglied 148q gegenüber liegt sondern dem letzten Kettenglied 148I, wenn vom kleineren Kettenrad 103 auf das größere Kettenrad 105 gewechselt wird. Auch hier ist die Vertiefung 105b derart dimensioniert, dass in allen Schaltsituationen lichter Abstand zwischen Kettenrad 105 und Laschen des letzten Kettenglieds 148I vorhanden ist. Die im Wesentlichen L-förmige Kontur der Vertiefung 105b ist in den Figuren 8 und 9 mit einer Strich-Punkt-Linie 109 angedeutet.

Die Konturlinie der Vertiefung 103b des Kettenrads 103 trägt die die Ziffer 111.

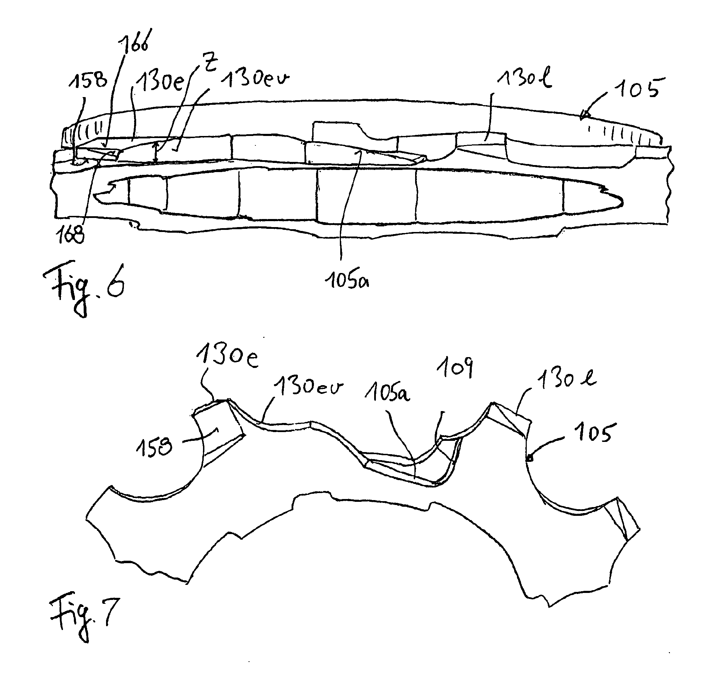

Aus den Figuren 6 und 7 lässt sich die Form der Vertiefung 105b gut entnehmen, ebenso wie die Form des ersten Zahn 130e. Man erkennt die vordere Zahnflanke 130ev, die schräg gestellte Seitenfläche 158, die schräg gestellte und geneigte Seitenfläche 166 sowie die Abschrägung 168 am vorderen, vom kleineren Kettenrad abgewandten Eck des Zahnkopfes des Zahns 130e. Die wirksame Zahndicke z ist ebenfalls eingezeichnet. Diese entspricht der Querverschiebung der Ketten 16 im Übergang von der Außenlaschen-Konstellation zur Innenlaschen-Konstellation und umgekehrt und hängt aufgrund der Neigung der Seitenfläche 166, und von der Eindringtiefe des Zahns 130e zwischen die Außenlaschen des ersten Kettenglieds 148e ab. Die Zahndicke z liegt im Bereich der Kettenlaschendicke, d.h. entspricht der Querverlagerung der Kette relativ zum letzten Zahn, beim (fiktiven) Übergang zwischen der Außenlaschen-Konstellation zur Innenlaschen-Konstellation bzw. umgekehrt.

Der Umschaltvorgang entspricht dem des ersten Ausführungsbeispiels gemäß Figuren 1 bis 4 mit den gleichen Vorteilen der uneingeschränkten Kompatibilität mit Schaltketten unterschiedlicher Hersteller und großer Schmutzunempfindlichkeit. Dies deshalb, weil die nunmehr zusätzlich vorgesehen Vertiefung 105b außer Berührung mit den Laschen des letzten Kettenglieds 148I bleibt. Gleiches gilt für die Vertiefung 103b, am Kettenrad 103 für den Übergang vom Kettenrad 101 auf das Kettenrad 103.

### Bezugszeichenliste

- 10: Gangschaltung
- 12: vordere Kettenradeinheit
- 14: Tretkurbelpaar
- 16: Schaltkette
- 18: hintere Kettenradeinheit
- 20: vordere Umlegeeinrichtung
- 22: hintere Umlegeeinrichtung
- 24: kleineres Kettenrad
- 24a: Hochschalt-Übergangsbereich des Kettenrads 24
- 26: größeres Kettenrad
- 26a: Hochschalt-Übergangsbereich des Kettenrads 26
- 28: Zähne des Kettenrads 24
- 28e: erster Zahn des Kettenrads 26
- 28I: letzter Zahn des Kettenrads 24
- 28Ih: hintere Zahnflanke des letzten Zahns 28I des Kettenrads 24
- 30: Zähne des größeren Kettenrads 26
- 30e: erster Zahn des Kettenrads 26
- 30ev: vordere Zahnflanke des Zahns 30e des Kettenrads 26
- 30I: letzter Zahn des Kettenrads 26
- 30Ih: hintere Zahnflanke des letzten Zahns 30I des Kettenrads 26
- 30z: zweiter Zahn des Kettenrads 26
- 32: Einfachzahnlücken zwischen den Zähnen 28
- 34: Einfachzahnlücken zwischen den Zähnen 30
- 36: Kettengelenke
- 38: Außenlaschen
- 40: Innenlaschen
- 42: Kettenrollen
- 42lh: hintere Kettenrolle des letzten Kettenglieds 481
- 421v: Vordere Kettenrolle des letzten Kettenglieds 481
- 44: Gelenkachsen
- 48: Kettenglieder
- 48e: erstes Kettenglied
- 48I: letztes Kettenglied
- 481-1: vorangehender Zahn zum Kettenglied 481
- 48q: querendes Kettenglied
- 50: Innenglieder
- 52: Außenglieder
- 54: Konturlinie
- 56: Außenfläche der Innenlasche 40
- 58: Seitenfläche des ersten Zahns 30e
- 60: Innenfläche der Außenlaschen 38
- 64: Innenfläche der Innenlasche 40
- 66: Seitenfläche des ersten Zahns 30e
- 68: Abschrägung des ersten Zahns 30e
- 101: Kettenrad mit Zähnezahl 11
- 103: Kettenrad mit Zähnezahl 12
- 105: Kettenrad mit Zähnezahl 13
- 107: Kettenrad mit Zähnezahl 14
- 103a: Übergangsbereich zum Kettenrad 103
- 105a: Übergangsbereich zum Kettenrad 105
- 107a: Übergangsbereich zum Kettenrad 107
- 111: Konturlinie der Vertiefung 103b
- A: Richtung
- B: Richtung
- L: Kettenlaufrichtung
- p: Kettenteilung
- e1: Innenlaschendicke
- z: Dicke des Zahns 30e

## Patentansprüche

1. Mehrfachkettenradeinheit für eine Kettenschaltung zur Verwendung mit einer Schaltkette (16) mit Kettenglieder (48) die von Innengliedern (50) mit Innenlaschen (40) und Außengliedern mit Außenlaschen (38) gebildet werden und mit Kettenrollen (42) aufweisenden Gelenkverbindungen zwischen den Kettengliedern (48) mit einem eine Kettenteilung (p) festlegenden Abstand zwischen den Achsen (44) unmittelbar aufeinanderfolgender Gelenkverbindungen (36), umfassend:
mindestens zwei Kettenräder, nämlich ein kleineres und ein größeres Kettenrad (24, 26; 103, 105), jeweils mit im Abstand entsprechend der Kettenteilung (p) hintereinander angeordneten Zähnen (28, 30; 128, 130) und zwischen aufeinanderfolgenden Zähnen gebildeten Einfachzahnlücken (32, 34),
wobei die beiden Kettenräder (24, 26; 103, 105) wenigstens einen gemeinsamen Hochschalt-Übergangsbereich aufweisen, in welchem beim Umlegen der Kette (16) vom kleineren Kettenrad (24; 103) auf das größere Kettenrad (26; 105) zum Gangwechsel die Kette (16) das kleinere Kettenrad (24; 103) verlässt, wobei letztmalig ein letzter Zahn (28I; 128I) des kleineren Kettenrads (24; 103) zwischen die Laschen eines letzten Kettenglieds (48l; 148l) der Kette (16) eingreift, und auf das größere Kettenrad (26; 105) aufläuft, wobei erstmalig ein erster Zahn (30e; 130e) des größeren Kettenrads (26; 105) entweder zwischen Außenlaschen (38) eines ersten Kettenglieds (48e; 148e) eingreift oder neben den Innenlaschen (40) eines ersten Kettenglieds (48e; 148e) steht,
und wobei zumindest das größere Kettenrad (26; 105) im Hochschalt-Übergangsbereich eine durch Weglassen eines Zahns gebildete Doppelzahnlücke aufweist, auf die der erste Zahn (30e; 130e) unmittelbar folgt,
**dadurch gekennzeichnet,**
**dass** bei Umlegen der Kette (16) und Hochschaltung zwischen dem letzten Kettenglied (48l; 148l) auf dem kleineren Kettenrad (24; 103) und dem ersten Kettenglied (48e; 148e) auf dem größeren Kettenrad (26; 105) lediglich ein vom kleineren Kettenrad (24; 103) zum größeren Kettenrad (26; 105) querendes Kettenglied (48q; 148q) angeordnet ist,
wobei die Kettenrolle (42) der Gelenkverbindung (36) zwischen dem querenden Kettenglied (48q; 148q) und dem letzten Kettenglied (48l; 148l) einer hinteren Zahnflanke (28lh) des letzten Zahns (28l) des kleineren Kettenrads (24; 103) unmittelbar gegenübersteht,
wobei dann, wenn das erste Kettenglied (48e; 148e) ein Außenglied (52) ist, der erste Zahn (30e; 130e) an der Innenfläche einer Außenlasche (38) des ersten Kettenglieds (48e; 148e) anliegt und mit seiner vorderen Zahnflanke (30ev) mit einer Umfangsfläche einer Innenlasche (40) des querenden Kettenglieds (48q; 148q) zusammenwirkt,
wobei dann, wenn das erste Kettenglied (48e; 148e) ein Innenglied (50) ist, der erste Zahn (30e) an einer Außenseite einer Innenlasche (40) des ersten Kettenglieds (48e; 148e) anliegt und mit seiner vorderen Zahnflanke (30ev) mit einer Umfangsfläche einer Außenlasche (38) des querenden Kettenglieds (48q; 148q) zusammenwirkt,
und **dass** das größere Kettenrad (26; 105) im Bereich (26a) der Doppelzahnlücke derart ausgebildet ist, dass das querende Kettenglied (48q; 148q) mit dem größeren Kettenrad (26; 105) ausschließlich im Bereich des ersten Zahns (30e; 130e) in Berührung kommt.

2. Mehrfachkettenradeinheit nach Anspruch 1,
**dadurch gekennzeichnet, dass** das größere Kettenrad (26) einen die Doppelzahnlücke bildenden herausgenommenen Bereich (26a) aufweist mit einer derartigen Form, dass das größere Kettenrad (26), in axialer Richtung betrachtet, im Wesentlichen keine 1 Überlappung mit dem querenden Kettenglied (48q) aufweist.

3. Mehrfachkettenradeinheit nach Anspruch 1,
**dadurch gekennzeichnet, dass** das größere Kettenrad (103) einen die Doppelzahnlücke bildenden herausgenommenen Bereich aufweist mit einer derartigen Form, dass das größere Kettenrad (103), in axialer Richtung betrachtet, eine Überlappung mit dem querenden Kettenglied (48q) aufweist, in Form einer vorzugsweise geprägten Vertiefung (103b) mit lichtem Abstand zwischen der Vertiefung (103b) und dem querenden Kettenglied (148q).

4. Mehrfachkettenradeinheit nach einem der vorhergehenden Ansprüche,
**dadurch gekennzeichnet, dass** das größere Kettenrad (26) in einem Überlappungsbereich mit den Laschen des letzten Kettenglied (148l) eine vorzugsweise geprägte Vertiefung (105b) aufweist, jedoch mit lichtem Abstand zwischen der Vertiefung (105b) und dem letzten Kettenglied (148l).

5. Mehrfachkettenradeinheit nach einem der vorhergehenden Ansprüche,
**dadurch gekennzeichnet, dass** der erste Zahn (30e; 130e) im Bereich eines am radial äußeren Ende der vorderen Zahnflanke (30ev) gebildeten Zahnkopfecks mit der Lasche des querenden Kettenglieds (48q) zusammenwirkt.

6. Mehrfachkettenradeinheit nach einem der vorhergehenden Ansprüche,
**dadurch gekennzeichnet, dass** der erste Zahn (30e; 130e) im Bereich eines am radial äußeren Ende der vorderen Zahnflanke (30ev) ausgebildeten Zahnkopfecks mit einer Einweisschräge für eine Außenlasche (38) des ersten Kettenglieds (48e) versehen ist.

7. Mehrfachkettenradeinheit nach einem der vorhergehenden Ansprüche,
**dadurch gekennzeichnet, dass** der erste Zahn (30e; 130e) dem Verlauf des querenden Kettenglieds (48q) im Wesentlichen entsprechend schräg gestellt ist und vorzugsweise eine Dicke (z) im Wesentlichen entsprechend der Laschendicke (e1) aufweist.

8. Mehrfachkettenradeinheit nach einem der vorhergehenden Ansprüche,
**dadurch gekennzeichnet, dass** sich die nominellen Zähnezahlen des größeren und des kleineren Kettenrads um 1 unterscheiden.

9. Kettenschaltung (10), insbesondere für Fahrräder, umfassend:
eine antreibbare Kettenradeinheit (12) und eine angetriebene Kettenradeinheit (18) sowie eine diese beiden Kettenradeinheiten (12, 18) miteinander verbindenden Schaltkette (16),
wobei mindestens eine der Kettenradeinheiten (12, 18) als Mehrfachkettenradeinheit gemäß einem der vorhergehenden Ansprüche ausgebildet ist, und
wobei zum Umlegen der Kette (16) zwischen den Kettenrädern der Mehrfachkettenradeinheit (12, 18) eine Umlegeeinrichtung (20, 22) in einem Einlaufbereich der Kette (16) vorgesehen ist, welche die Kette (16) zum Gangwechsel von einem der Kettenräder auf das andere Kettenrad überführt.

## Claims

1. Multipart chain wheel unit for a derailleur for use with a gearshifting chain (16) with chain links (48), which are formed by inner links (50) having inner plates (40) and by outer links having outer plates (38), and with articulated connections between the chain links (48), said articulated connections having chain rollers (42), with a spacing between the axes (44) of directly consecutive articulated connections (36), the spacing determining a chain pitch (p), said multipart chain wheel unit comprising:
at least two chain wheels, namely a smaller and a larger chain wheel (24, 26; 103, 105), each having teeth (28, 30; 128, 130), arranged consecutively at the spacing corresponding to the chain pitch (p), and single tooth gaps (32, 34) formed between consecutive teeth,
wherein the two chain wheels (24, 26; 103, 105) have at least one common upshifting transition region in which, during the transfer of the chain (16) from the smaller chain wheel (24; 103) onto the larger chain wheel (26; 105) in order to change gear, the chain (16) leaves the smaller chain wheel (24; 103), a last tooth (281; 1281) of the smaller chain wheel (24; 103) engaging last between the plates of a last chain link (481; 1481) of the chain (16), and runs onto the larger chain wheel (26; 105), a first tooth (30e; 130e) of the larger chain wheel (26; 105) first either engaging between outer plates (38) of a first chain link (48e; 148e) or being located next to the inner plates (40) of a first chain link (48e; 148e),
and wherein at least the larger chain wheel (26; 105) has, in the upshifting transition region, a double tooth gap which is formed by omission of a tooth and which is immediately followed by the first tooth (30e; 130e),
**characterized in that**
during the transfer of the chain (16) and upshifting, just one chain link (48q; 148q) which crosses from the smaller chain wheel (24; 103) to the larger chain wheel (26; 105) is arranged between the last chain link (481; 1481) on the smaller chain wheel (24; 103) and the first chain link (48e; 148e) on the larger chain wheel (26; 105),
the chain roller (42) of the articulated connection (36) between the crossing chain link (48q; 148q) and the last chain link (481; 1481) being located directly opposite a rear tooth flank (281h) of the last tooth (281) of the smaller chain wheel (24; 103),
and, whenever the first chain link (48e; 148e) is an outer link (52), the first tooth (30e; 130e) bearing against the inner surface of an outer plate (38) of the first chain link (48e; 148e) and interacting by means of the front tooth flank (30ev) thereof with a circumferential surface of an inner plate (40) of the crossing chain link (48q; 148q),
and, whenever the first chain link (48e; 148e) is an inner link (50) the first tooth (30e) bearing against an outer side of an inner plate (40) of the first chain link (48e; 148e) and, by means of the front tooth flank (30ev) thereof, interacting with a circumferential surface of an outer plate (38) of the crossing chain link (48q; 148q),
and **in that** the larger chain wheel (26; 105) is designed in the region (26a) of the double tooth gap in such a manner that the crossing chain link (48q; 148q) comes into contact with the larger chain wheel (26; 105) exclusively in the region of the first tooth (30e; 130e).

2. Multipart chain wheel unit according to Claim 1, **characterized in that** the larger chain wheel (26) has a removed region (26a) which forms the double tooth gap and has a shape such that the larger chain wheel (26), as viewed in the axial direction, essentially does not have any overlap with the crossing chain link (48q).

3. Multipart chain wheel unit according to Claim 1, **characterized in that** the larger chain wheel (103) has a removed region which forms the double tooth gap and has a shape such that the larger chain wheel (103), as viewed in the axial direction, has an overlap with the crossing chain link (48q) in the form of a preferably stamped depression (103b), with a clear spacing between the depression (103b) and the crossing chain link (148q).

4. Multipart chain wheel unit according to one of the preceding claims, **characterized in that**, in an overlapping region with the plates of the last chain link (1481), the larger chain wheel (26) has a preferably stamped depression (105b), but with a clear spacing between the depression (105b) and the last chain link (1481).

5. Multipart chain wheel unit according to one of the preceding claims, **characterized in that** the first tooth (30e; 130e) interacts in the region of a tooth tip corner, which is formed at the radially outer end of the front tooth flank (30ev), with the plate of the crossing chain link (48q).

6. Multipart chain wheel unit according to one of the preceding claims, **characterized in that** the first tooth (30e; 130e) is provided in the region of a tooth tip corner, which is formed at the radially outer end of the front tooth flank (30ev), with an installation slope for an outer plate (38) of the first chain link (48e).

7. Multipart chain wheel unit according to one of the preceding claims, **characterized in that** the first tooth (30e; 130e) is positioned obliquely substantially corresponding to the profile of the crossing chain link (48q) and preferably has a thickness (z) substantially corresponding to the plate thickness (e1).

8. Multipart chain wheel unit according to one of the preceding claims, **characterized in that** the nominal numbers of teeth of the larger and of the smaller chain wheel differ by 1.

9. Derailleur (10), in particular for bicycles, comprising:
a drivable chain wheel unit (12) and a driven chain wheel unit (18), and also a gearshifting chain (16) connecting said two chain wheel units (12, 18) to each other,
at least one of the chain wheel units (12, 18) being designed as a multipart chain wheel unit according to one of the preceding claims, and
for the transfer of the chain (16) between the chain wheels of the multipart chain wheel unit (12, 18), a transfer device (20, 22) being provided in an inlet region of the chain (16), the transfer device transferring the chain (16) from one of the chain wheels to the other chain wheel in order to change gear.

## Revendications

1. Unité de plateaux multiples pour un dérailleur de chaîne pour l'utilisation avec une chaîne de commutation (16) avec des maillons de chaîne (48) qui sont formés par des maillons internes (50) avec des flasques internes (40) et par des maillons externes avec des flasques externes (38) et avec des connexions articulées présentant des rouleaux de chaîne (42) entre les maillons de chaîne (48), avec une distance établissant une division de chaîne (p) entre les axes (44) de connexions articulées (36) directement successives, comprenant :
au moins deux plateaux, à savoir un plateau plus petit et un plateau plus grand (24, 26 ; 103, 105), à chaque fois avec des dents (28, 30 ; 128, 130) disposées les unes derrière les autres à distance de manière correspondant à la division de chaîne (p), et avec des espaces simples entre dents (32, 34) formés entre des dents successives,
les deux plateaux (24, 26 ; 103, 105) présentant au moins une région de transition commune de passage à la vitesse supérieure, dans laquelle, lors du changement de la chaîne (16) du plus petit plateau (24 ; 103) au plus grand plateau (26 ; 105), pour le changement de vitesse, la chaîne (16) quitte le plus petit plateau (24 ; 103), finalement une dernière dent (281 ; 1281) du plus petit plateau (24 ; 103) vient en prise entre les flasques d'un dernier maillon de chaîne (481 ; 1481) de la chaîne (16), et passe au plus grand plateau (26 ; 105), une première dent (30e ; 130e) du plus grand plateau (26 ; 105) étant initialement soit en prise entre des flaques externes (38) d'un premier maillon de chaîne (48e ; 148e) soit à côté des flasques internes (40) d'un premier maillon de chaîne (48e ; 148e),
et au moins le plus grand plateau (26 ; 105) présentant, dans la région de transition de passage à la vitesse supérieure un espace double entre dents formé par l'omission d'une dent, qui est immédiatement suivi de la première dent (30e ; 130e),
**caractérisée en ce que**
lors du changement de la chaîne (16) et du passage à la vitesse supérieure, seulement un maillon de chaîne (48q ; 148q) traversant du plus petit plateau (24 ; 103) au plus grand plateau (26 ; 105) est disposé entre le dernier maillon de chaîne (481 ; 1481) sur le plus petit plateau (24 ; 103) et le premier maillon de chaîne (48e ; 148e) sur le plus grand plateau (26 ; 105),
le rouleau de chaîne (42) de la connexion articulée (36) entre le maillon de chaîne traversant (48q ; 148q) et le dernier maillon de chaîne (481 ; 1481) étant directement en regard d'un flanc de dent arrière (281h) de la dernière dent (281) du plus petit plateau (24 ; 103),
et lorsque le premier maillon de chaîne (48e ; 148e) est un maillon externe (52), la première dent (30e ; 130e) s'appliquant contre la surface interne d'un flasque interne (38) du premier maillons de chaîne (48e ; 148e) et coopèrant avec son flanc de dent avant (30ev) avec une surface périphérique d'un flasque interne (40) du maillon de chaîne traversant (48q ; 148q),
et lorsque le premier maillon de chaîne (48e ; 148e) est un maillon interne (50), la première dent (30e) s'appliquant contre un côté externe d'un flasque interne (40) du premier maillon de chaîne (48e ; 148e) et coopèrant avec son flanc de dent avant (30ev) avec une surface périphérique d'un flasque externe (38) du maillon de chaîne traversant (48q ; 148q),
et **en ce que** le plus grand plateau (26 ; 105) dans la région (26a) de l'espace double entre dents est réalisé de telle sorte que le maillon de chaîne traversant (48q ; 148q) vienne en contact avec le plus grand plateau (26 ; 105) exclusivement dans la région de la première dent (30e ; 130e).

2. Unité de plateaux multiples selon la revendication 1, **caractérisée en ce que** le plus grand plateau (26) présente une région (26a) ressortie formant l'espace double entre dents, avec une forme telle que le plus grand plateau (26), considéré dans la direction axiale, ne présente essentiellement aucun chevauchement avec le maillon de chaîne traversant (48q).

3. Unité de plateaux multiples selon la revendication 1, **caractérisée en ce que** le plus grand plateau (103) présente une région ressortie formant l'espace double entre dents, avec une forme telle que le plus grand plateau (103), considéré dans la direction axiale, présente un chevauchement avec le maillon de chaîne traversant (48q), en forme de renfoncement de préférence gaufré (103b) avec une distance intérieure entre le renfoncement (103b) et le maillon de chaîne traversant (148q).

4. Unité de plateaux multiples selon l'une quelconque des revendications précédentes,
**caractérisée en ce que** le plus grand plateau (26) présente, dans une région de chevauchement avec les flasques du dernier maillon de chaîne (1481), un renfoncement de préférence gaufré (105b), mais avec une distance intérieure entre le renfoncement (105b) et le dernier maillon de chaîne (1481).

5. Unité de plateaux multiples selon l'une quelconque des revendications précédentes,
**caractérisée en ce que** la première dent (30e ; 130e) coopère dans la région d'un coin de tête de dent formé sur l'extrémité radialement extérieure du flanc de dent avant (30ev) avec le flasque du maillon de chaîne traversant (48q).

6. Unité de plateaux multiples selon l'une quelconque des revendications précédentes,
**caractérisée en ce que** la première dent (30e ; 130e) est pourvue, dans la région d'un coin de tête de dent réalisé à l'extrémité radialement extérieure du flanc de dent avant (30ev), d'un biseau de guidage pour un flasque externe (38) du premier maillon de chaîne (48e).

7. Unité de plateaux multiples selon l'une quelconque des revendications précédentes,
**caractérisée en ce que** la première dent (30e ; 130e) est inclinée obliquement de manière à correspondre essentiellement à l'allure du maillon de chaîne traversant (48q) et présente de préférence une épaisseur (z) correspondant essentiellement à l'épaisseur du flasque (e1).

8. Unité de plateaux multiples selon l'une quelconque des revendications précédentes,
**caractérisée en ce que** les nombres de dents nominaux du plus grand et du plus petit plateau se distinguent d'une unité.

9. Dérailleur de chaîne (10), en particulier pour bicyclettes, comprenant :
une unité de plateau entraînable (12) et une unité de plateau entraînée (18) ainsi qu'une chaîne de commutation (16) reliant ces deux unités de plateau (12, 18) l'une à l'autre,
au moins l'une des unités de plateau (12, 18) étant réalisée sous forme d'unité de plateaux multiples selon l'une quelconque des revendications précédentes, et
pour le changement de la chaîne (16) entre les plateaux de l'unité de plateaux multiples (12, 18), un dispositif de changement de vitesse (20, 22) est prévu dans une région d'entrée de la chaîne (16), lequel fait passer la chaîne (16), pour un changement de vitesse, de l'un des plateaux à l'autre.
